**Europäisches Patentamt**

**European Patent Office**

**Office européen des brevets**

(19)

(11) Veröffentlichungsnummer : **0 353 182 B1**

(12)    # EUROPÄISCHE PATENTSCHRIFT

(45) Veröffentlichungstag der Patentschrift :
22.07.92 Patentblatt 92/30

(51) Int. Cl.⁵ : **F16L 15/00**

(21) Anmeldenummer : **89730173.5**

(22) Anmeldetag : **25.07.89**

(54) **Rohrgewindeverbindung.**

(30) Priorität : **28.07.88 DE 3825993**

(43) Veröffentlichungstag der Anmeldung :
**31.01.90 Patentblatt 90/05**

(45) Bekanntmachung des Hinweises auf die
Patenterteilung :
**22.07.92 Patentblatt 92/30**

(84) Benannte Vertragsstaaten :
**AT DE ES FR GB GR IT NL**

(56) Entgegenhaltungen :
EP-A- 0 060 549
US-A- 2 040 766
US-A- 2 267 716
US-A- 3 307 860
OIL AND GAS JOURNAL. vol. 82, no. 12, März
1984, TULSA US Seiten 202 - 203; FMC Corporation: "How an unusual casing connectorcombines 4 threads per inch with 5 threads
per inch to imitate 20 threads per inch. And
why."

(73) Patentinhaber : **MANNESMANN
Aktiengesellschaft
Mannesmannufer 2
W-4000 Düsseldorf 1 (DE)**

(72) Erfinder : **Pfeiffer, Gerd, Dr.-Ing.
Im Look 55
W-4330 Mülheim (DE)**
Erfinder : **Krug, Gerhard, Dr.-Ing.
Beim Gansacker 26
W-4100 Duisburg 25 (DE)**
Erfinder : **Quadflieg, Erich, Dr.-Ing.
Grotenburgstrasse 209
W-4150 Krefeld (DE)**
Erfinder : **Siekmeyer, Josef, Dr.-Ing.
Kalkstrasse 3a
W-4030 Ratingen 4 (DE)**
Erfinder : **Lenze, Friedrich, Dr.-Ing.
Tiefebroicher Strasse 76
W-4030 Ratingen 4 (DE)**

(74) Vertreter : **Presting, Hans-Joachim, Dipl.-Ing.
et al
Meissner & Meissner Patentanwaltsbüro
Herbertstrasse 22
W-1000 Berlin 33 (DE)**

EP 0 353 182 B1

**Beschreibung**

Die vorliegende Erfindung betrifft eine Rohrgewindeverbindung gemäß dem Gattungsbegriff des Hauptanspruches.

Aus der EP-A-00 60 549 ist eine gattungsmäßige Rohrgewindeverbindung bekannt, deren Muffenelement zwei unterschiedlich ausgebildete Innengewindeabschnitte aufweist, wobei der Unterschied in der Gängigkeit oder im Drehsinn liegen kann. Beide Gewindeabschnitte der Muffe als auch die komplementär dazu ausgebildeten Außengewindeabschnitte der zwei zu verbindenden Rohre sind zylindrisch ausgebildet. Zur Verhinderung von Relativbewegungen der beiden Rohre zueinander sind die gewindefreien Rohrenden als Klauen ausgebildet, die ineinander steckbar sind. Damit ist eine genaue Positionierung der zu verbindenden Rohre z. B. für eine Steigleitung möglich. Die Dichtfunktion übernimmt ein ringförmiges Dichtelement, das im Bereich der gewindefreien Rohrenden angeordnet ist und mit seinen an den Enden kegelstumpfförmig ausgebildeten Flächen metallisch dichtend an entsprechend auf der Innenseite der Klauen ausgebildeten Flächen anliegt. Ergänzend dazu wird vorgeschlagen, in den entsprechende Ausnehmungen aufweisenden Dichtflächen elastische Dichtungen anzuordnen. Diese Art der Rohrgewindeverbindung ist wenig geeignet für eine Bohrrohrverbindung, die sowohl Längskräfte infolge des Eigengewichtes des Bohrgestänges als auch große Drehmomente während des Bohrens übertragen muß und die häufig entschraubt und wieder verschraubt wird.

Aufgabe der vorliegenden Erfindung ist es, eine Rohrgewindeverbindung zu schaffen, die als Bohrrohrverbindung für Tiefbohrungen besonders geeignet und die unempfindlich gegen Schwefelwasserstoffhaltige Medien ist.

Diese Aufgabe wird durch die kennzeichnenden Merkmale des Hauptanspruches gelöst. Vorteilhafte Weiterbildungen sind in den Unteransprüchen festgelegt.

Im Vergleich zu einer Standard-API-Verbindung mit angeschweißten Verbindern zeichnet sich der Lösungsvorschlag dadurch aus, daß die aufzunehmende Gesamtbeanspruchung infolge der Längskraft und des Drehmomentes auf verschieden ausgebildete Elemente der Verbindung aufgeteilt wird. Dabei kommt der formschlüssigen Verbindung der Rohrenden besondere Bedeutung zu, da damit beliebig hohe Arbeitsdrehmomente während des Bohrens, unabhängig vom Verschraubmoment übertragen werden können. Die Rohrenden können dazu im Querschnitt als Keilwelle bzw. als Keilnabe ausgebildet sein. Andere Lösungsmöglichkeiten sind eine Kerbverzahnung oder die Ausbildung als Klaue. In allen Fällen wird weiterbildend vorgeschlagen, ein Element des Profils, d. h. ein Keil, ein Zahn oder eine Klaue in Umfangserstreckung verschieden von den anderen auszubilden und damit sicherzustellen, daß der Eingriffspunkt des Gewindes des Rohres für die Verschraubung mit der Muffe und die richtige Lückenstellung der komplementär ausgebildeten Profile der Rohrenden miteinander korrespondieren.

Die beiden Gewindeabschnitte der Muffe und der dazugehörigen Rohre sind kegelig ausgebildet mit unterschiedlichem Drehsinn, Gängigkeit und Kegelwinkel. Die kegelige Ausbildung des Gewindeabschnittes hat im Vergleich zu einem zylindrischen den Vorteil, daß die Nachschneidemöglichkeit eines verschlissenen Gewindes günstiger ist und durch das tiefe Einstecken des Zapfens in den Muffenteil die Verschraubung mit nur wenigen Umdrehungen erfolgen kann. Dieser sich daraus ergebende kurze Zeitanteil für eine Verschraubung bzw.

Entschraubung ist bei der Vielzahl der erforderlichen Entschraubungen und Wiederverschraubungen ein wesentlicher Kostenfaktor. Der unterschiedliche Kegelwinkel und die unterschiedliche Gängigkeit der beiden Gewindeabschnitte sind so aufeinander abgestimmt, daß im entschraubten Zustand das in der Gewindeverbindung obenliegende Rohr frei wird und das darunter hängende Rohr formschlüssig mit der Muffe verbunden bleibt. Dabei soll der Grad der verbleibenden Überdeckung zwischen Zapfenteil des Rohres und der Muffe noch so groß sein, daß das Tragen mindestens eines Dreierstranges noch möglich ist. Damit die Entschraubung eindeutig begrenzt ist, weist der gewindefreie Abschnitt der Muffe an dem dem Bohrkopf zuweisenden Ende eine radial nach innen springende Schulter auf. Diese Schulter kommt beim Entschrauben an der über die Ausnehmung des Rohrendes hervorstehenden Stirnfläche der Dichthülse zum Anliegen. Die ringförmige Dichthülse selbst ist in dem Ringraum angeordnet, der begrenzt wird einerseits durch den gewindefreien Abschnitt der Muffe und der jeweils gegenüberliegenden Ausnehmung der beiden Rohrenden. Die radiale Erstreckung der beiden Ausnehmungen ist dabei so bemessen, daß die verbleibende Wanddicke im Rohrendenbereich für die Übertragung des Arbeitsdrehmomentes noch ausreichend ist. Zur axialen Fixierung der Dichthülse weist diese im Bereich eines Endes einen Innengewindeabschnitt auf, der mit dem in der Ausnehmung des im Bohrgestänge nach oben weisenden Rohrendes angeordneten, komplementär dazu ausgebildeten Außengewindeabschnitt verschraubbar ist. Zur Erleichterung des Drehens der Dichthülse werden an dem gegenüberliegenden Ende Ausnehmungen, zum Beispiel Nuten oder Bohrungen angeordnet, in die ein entsprechendes Werkzeug eingreifen kann. Die Verschraubung ist eine Möglichkeit der axialen Fixierung der Dichthülse, eine andere Möglichkeit wäre die Ausbildung einer hervorspringenden Nase auf dem Rohrende, die in eine entsprechende Aus-

2

nehmung der Dichthülse eingreifen würde.

Im verschraubten Zustand liegen die Stirnflächen der Dichthülse dichtend an der Ringfläche der jeweiligen Ausnehmung der Rohrenden an, während die formschlüssige Verbindung an den Rohrenden in diesem Zustand axiales Spiel aufweist. Die anliegenden Flächen der Dichthülse in der Ausnehmung der Rohrenden übernehmen dabei die erforderliche hydraulische Dichtfunktion und nehmen bei gleichzeitiger Verschraubbegrenzung für die Muffe die erforderliche Stoßvorspannung für die Zugbelastung auf.

Die Verschraubung einer solchen vorgeschlagenen Bohrrohrverbindung wird in folgenden Schritten durchgeführt. Werkstattmäßig wird zuerst die Muffe linksdrehend auf den später im Bohrgestänge nach oben weisenden Zapfenteil eines Rohres aufgeschraubt und anschließend die ringförmige Dichthülse eingeschraubt. Damit die Muffe in der richtigen Einschraubposition für das zu verbindende Rohr ist, wird die Muffe rechtsdrehend bis zum Schulteranschlag des gewindefreien Abschnittes zurückgedreht. In diesem Zustand werden die einzelnen Rohre angeliefert und auf der Bohrplattform wird mit den üblichen Hilfsmitteln das nächste Rohr mit dem muffenfreien Ende in die nach oben zeigende Muffe des bereits eingebauten Strangteiles eingesteckt. Dabei ist es wichtig, daß durch die besondere Ausbildung der formschlüssigen Verbindung der Gewindeeingriffspunkt mit der richtigen Lückenstellung der Verbindungsteile, sei es Keile, Zähne oder Klauen, korrespondiert. In jedem Fall sind die Abmessungen so aufeinander abgestimmt, daß bevor die Muffe gedreht wird, die Verbindungsteile der formschlüssigen Verbindung schon im Eingriff sind. Danach wird die Muffe in Richtung Bohrkopf gesehen im Gegenuhrzeigersinn gedreht und dadurch die beiden Rohrenden ohne Eigendrehung zueinander gezogen, bis die Stirnflächen der Dichthülse zum Anliegen kommen. Die Anordnung des linksgängigen Gewindes auf der unten liegenden Seite der Rohrverbindung hat den Zweck, daß im rechtsdrehenden Bohrbetrieb durch die nicht zu vermeidende Berührung der Muffe mit der Bohrlochwand ein unbeabsichtigtes Lösen der Gewindeverbindung vermieden wird.

Für einen ähnlichen Zweck ist vorgesehen, daß der Außendurchmesser der Dichthülse immer etwas kleiner ist, als der Innendurchmesser des gewindefreien Abschnittes der Muffe. Damit wird vermieden, daß die Muffe während des Drehens die Dichthülse berührt und sie auf diese Weise entschraubt werden könnte.

Beim Lösen der Verbindung wird in umgekehrter Reihenfolge verfahren. Die Muffe wird im Uhrzeigersinn gedreht und damit bewegen sich die beiden Rohre auseinander. Bevor die Entschraubbegrenzung erreicht ist, ist das obenliegende Rohr frei und kann herausgezogen werden. Das untenhängende Rohr verbleibt im teilweise formschlüssigen Verbund mit der Muffe, und zwar mit einer Überdeckung, die das Tragen eines Dreierstranges gestattet.

Ein weiterer Vorteil der vorgeschlagenen Bohrrohrverbindung ergibt sich dadurch, daß durch den Wegfall des angeschweißten Verbinders diese unempfindlich gegen aggressive Medien, wie zum Beispiel Schwefelwasserstoff ist.

In der Zeichnung wird die erfindungsgemäße Bohrrohrverbindung näher erläutert.

Es zeigt:

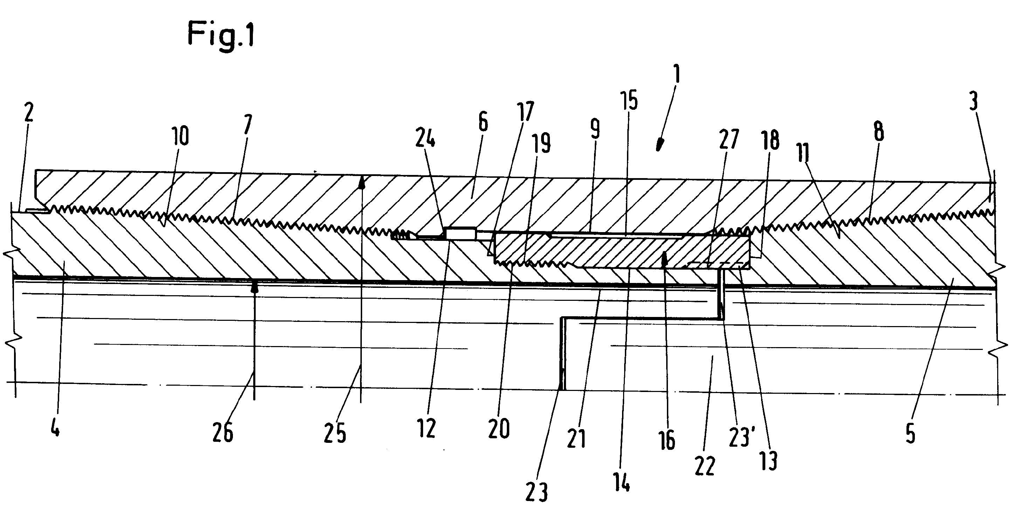

Figur 1 einen unvollständigen Längsschnitt durch die erfindungsgemäße Bohrrohrverbindung im verschraubten Zustand

In Figur 1 ist ein unvollständiger Längsschnitt durch die erfindungsgemäße Bohrrohrverbindung 1 im verschraubten Zustand dargestellt. Diese Verbindung 1 besteht aus einem Rohr 2, das per Festlegung das im Bohrgestänge untenhängende Rohr sein soll und einem darüberhängenden Rohr 3 sowie aus der die beiden Rohre 2,3 verbindenden Muffe 6. Beide Rohre 2,3 haben einen angestauchten Rohrendenbereich 4,5, der Übergang in die dünnwandigere Rohrausgangswand wurde hier weggelassen. Die Muffe 6 weist zwei kegelig ausgebildete Gewindeabschnitte 7,8 und einen dazwischenliegenden gewindefreien Abschnitt 9 auf. Die Gewindeabschnitte 7,8 sind mit den komplementär dazu ausgebildeten Gewindeabschnitten 10,11 der Rohre 2,3 verschraubbar. Die Kegelsteigung der beiden Gewindeabschnitte 7,8 bzw. 10,11 sind verschieden und beträgt in diesem Ausführungsbeispiel für den im Bohrgestänge untenhängenden Gewindeabschnitt 7,10 1:8 und den darüberhängenden 8,11 1:6, wobei der erstgenannte Gewindeabschnitt 7,10 linksgängig und der zweite rechtsgängig ist. Außerdem ist dieser darüberhängende Gewindeabschnitt 8,11 zweigängig. Die Gewindeabschnitte 10,11 der beiden Rohre 2,3 erstrecken sich nicht bis an das Ende, sondern enden im Bereich der formschlüssig miteinander verbundenen Rohrenden. Diese Abschnitte 12,13 weisen eine Ausnehmung 13,14 auf, wobei bei dem darüberhängenden Rohr 3 dieser Abschnitt 13 und die Ausnehmung 13 deckungsgleich sind. Die Ausnehmungen 13,14 und der gewindefreie Abschnitt 9 der Muffe 6 begrenzen einen Ringraum 15, in den eine Dichthülse 16 angeordnet ist. Im verschraubten Zustand, wie hier dargestellt, begrenzen die Stirnflächen 17,18 der Dichthülse 16 die Verschraubung und dichten gleichzeitig die Verbindung 1 hydraulisch ab. Zur Fixierung der Dichthülse 16 in der Ausnehmung 14 des Rohres 2 weist diese einen Innengewindeabschnitt 19 auf, der mit dem dazu komplementär ausgebildeten Außengewindeabschnitt 20 der Ausnehmung 14 verschraubbar ist. Das Arbeitsdrehmoment während des Bohrens wird durch eine formschlüssige Verbindung der beiden Rohrenden übertragen. In diesem Ausführungsbeispiel sind diese als ineinandersteckbare Klauen 21,22 ausgebildet. Im verschraubten Zustand weisen sie axial ein Spiel 23,23' auf. Bei der Entschraubung wird die Muffe 6 durch die am Ende des gewindefreien Abschnittes 9 ausgebildete radial nach innen springende Schulter 24 positioniert. Diese Schulter 24 liegt dann an dem oberen Teil der Stirnfläche 17 der Dichthülse 16 an. Das Außenmaß der Muffe 6, hier dargestellt durch den Pfeil 25, entspricht dem eines Standard-API-Verbinders. Ebenso ist die Bohrung im Bereich der Verbindung 1 glattbündig mit einem Innendurchmesser, hier dargestellt durch den Pfeil 26, der dem eines API-Verbinders entspricht.

Die Verbindung 1 der beiden Rohre 2,3 erfolgt in den nachfolgend beschriebenen Stufen. In der Werkstatt wird vor der Auslieferung die Muffe 6 linksdrehend auf den später im Bohrgestänge nach oben weisenden Gewindeabschnitt 10 aufgeschraubt. Anschließend wird die Dichthülse 16 in die Ausnehmung 14 des Rohres 2 eingeschraubt, bis die Stirnfläche 17 zur Anlage kommt. Damit zum Einschrauben der Dichthülse 16 ein entsprechend ausgebildetes Drehwerkzeug verwendet werden kann, weist die Dichthülse 16 an dem gegenüberliegenden Ende eine entsprechende Ausnehmung 27 auf (hier nur schematisch dargestellt). Auf der Bohrplattform wird das nächste Rohr 3 mit dem muffenfreien Ende in die nach oben zeigende Muffe 6 eingesteckt, und zwar so, daß der Gewindeeingriffspunkt mit der entsprechenden Lücke der Klauenverbindung korrespondiert. Durch Drehen der Muffe 6 werden die beiden Rohre 2,3 im Bereich der Klauen 21,22 ineinandergeschoben, bis die Stirnfläche 18 der Dichthülse 16 zum Anliegen kommt. Durch einen entsprechenden Drehmomentenanzug wird die Verbindung 1 im Bereich der beiden Stirnflächen 17,18 abgedichtet.

Die Entschraubung erfolgt in der Weise, daß die Muffe 6 anders herumgedreht wird und die beiden Rohre 2,3 im Bereich der Klauen 21,22 sich dabei entfernen. Bevor die die Entschraubung begrenzende Schulter 24 an der Stirnfläche 17 der Dichthülse 16 anliegt, ist das darüberliegende Rohr 3 frei, während das darunterhängende Rohr 2 noch weiterhin formschlüssig mit der Muffe 6 verbunden ist. Der Grad der Überdeckung soll so groß sein, daß es zum Tragen eines Dreierstranges ausreichend ist.

**Patentansprüche**

1. Rohrgewindeverbindung mit einer Muffe, deren im Drehsinn oder in der Gängigkeit unterschiedliche Innengewindeabschnitte sich vom jeweiligen Ende der Muffe bis zu einem in der Mitte liegenden gewindefreien Abschnitt erstrecken, und mit zwei Rohren, die im angestauchten Rohrendenbereich jeweils einen komplementär zur Muffe ausgebildeten Gewindeabschnitt aufweisen und deren Rohrenden formschlüssig ineinander schiebbar sind und mit einem in diesem Bereich verdrehsicher angeordneten ringförmigen Dichtelement, **dadurch gekennzeichnet,** daß bei deren Verwendung als Bohrrohrverbindung (1) die im Drehsinn und in der Gängigkeit unterschiedlichen Gewindeabschnitte (7,8;10,11) der Muffe (6) und der Rohre (2,3) kegelig mit unterschiedlichem Kegelwinkel ausgebildet sind und der gewindefreie Abschnitt (9) der Muffe (6) und die eine Ausnehmung (13,14) aufweisenden Rohrenden einen Ringraum (15) begrenzen, in dem eine Dichthülse (16) angeordnet ist, deren Außendurchmesser etwas kleiner ist als der Innendurchmesser des gewindefreien Abschnittes (9) der Muffe (6) und die in der Ausnehmung (14) des im Bohrgestänge nach oben weisenden Rohrendes axial fixiert ist und der gewindefreie Abschnitt (9) der Muffe (6) an dem im Bohrgestänge nach unten weisenden Ende eine radial nach innen springende Schulter (24) aufweist und im verschraubten Zustand die Stirnflächen (17,18) der Dichthülse (16) dichtend an der Ringfläche der jeweiligen Ausnehmung (13,14) der Rohrenden anliegen, während die formschlüssige Verbindung (21,22) der Rohrenden ein axiales Spiel (23,23') aufweist und das im Bohrgestänge unten hängende Rohr (2) der Verbindung (1) anschließend an die Ausnehmung (14) in Richtung Bohrkopf einen gewindefreien Abschnitt (12) aufweist, dessen axiale Erstreckung auch im verschraubten Zustand über das Ende des gewindefreien Abschnittes (9) der Muffe (6) hinausragt und dessen Außendurchmesser etwas kleiner ist, als die radiale Erstreckung der Schulter (24) der Muffe (6).

2. Rohrgewindeverbindung nach Anspruch 1, **dadurch gekennzeichnet,** daß der in einem Bohrgestänge unten liegende Gewindeabschnitt (7,10) von der Muffe (6) und vom Rohr (2) linksgängig ist und einen flacheren Kegel aufweist, während der oben liegende (8,11) rechtsgängig ist und einen steileren Kegel sowie eine größere Gängigkeit aufweist.

3. Rohrgewindeverbindung nach den Ansprüchen 1 und 2, **dadurch gekennzeichnet,** daß Kegelwinkel und Gängigkeit der beiden Gewindeabschnitte (7,10;8,11) so aufeinander abgestimmt sind, daß im entschraubten Zustand das in der Gewindeverbindung (1) oben liegende Rohr (3) frei ist und das darunterhängende Rohr (2) formschlüssig mit der Muffe (6) verbunden bleibt.

4. Rohrgewindeverbindung nach Anspruch 3, **dadurch gekennzeichnet,**

daß der Grad der verbleibenden formschlüssigen Überdeckung im entschraubten Zustand zum Tragen eines Dreierstranges geeignet ist.

5. Rohrgewinde nach Anspruch 1,
**dadurch gekennzeichnet,**
daß die Dichthülse (16) einen über eine bestimmte Länge sich erstreckenden Innengewindeabschnitt (19) aufweist, der mit einem in der Ausnehmung (14) des im Bohrgestänge nach oben weisenden Rohrendes angeordneten komplementär dazu ausgebildeten Außengewindeabschnitts (20) verschraubbar ist.

6. Rohrgewindeverbindung nach Anspruch 1,
**dadurch gekennzeichnet,**
daß die radiale Erstreckung der beiden Ausnehmungen (13,14) so bemessen ist, daß die verbleibende Wanddicke im Rohrendenbereich für die Übertragung des Arbeitsdrehmomentes ausreichend ist.

7. Rohrgewindeverbindung nach Anspruch 1,
**dadurch gekennzeichnet,**
daß ein Rohrende im Querschnitt ein Keilwellenprofil aufweist und daß das gegenüberliegende Rohrende ein Keilnabenprofil aufweist.

8. Rohrgewindeverbindung nach Anspruch 7,
**dadurch gekennzeichnet,**
daß das Profil symmetrisch über den Umfang verteilt mindestens zwei oder ein Vielfaches davon an Keilen aufweist, wovon ein Keil und die dazugehörige Nabe in der Umfangserstreckung unterschiedlich sind.

9. Rohrgewindeverbindung nach Anspruch 1,
**dadurch gekennzeichnet,**
daß die formschlüssige Verbindung der Rohrenden als Kerbverzahnung ausgebildet ist, wovon ein Zahn und die dazugehörige Zahnlücke im Profil verschieden sind.

10. Rohrgewindeverbindung nach Anspruch 1,
**dadurch gekennzeichnet,**
daß die Rohrenden als Klauen (21,22) ausgebildet sind, wovon eine Klaue und die dazugehörige Klauenlücke in der Umfangserstreckung unterschiedlich sind.

11. Rohrgewindeverbindung nach Anspruch 1,
**dadurch gekennzeichnet,**
daß die Dichthülse (16) an dem dem Gewindeabschnitt (19) gegenüberliegenden Ende eine zur Aufnahme eines Stellmittels geeignete Ausnehmung (27) aufweist.


**Claims**

1. A threaded pipe connection comprising a bushing, the internal threaded sections of which, which differ in direction of rotation or in direction of spiral, extend from the respective end of the bushing to a thread-free section located in the centre, and comprising two pipes which in the upset pipe end region each have a threaded section designed to complement the bushing and the pipe ends of which can be pushed into one another in positive manner, and comprising an annular sealing element which is arranged to be protected against torsion in this region,
**characterised in that**
when used as a casing pipe connection (1) the threaded sections (7, 8; 10, 11) of the bushing (6) and of the pipes (2, 3) which differ in direction of rotation and in direction of spiral are conical with differing cone angles, and the thread-free section (9) of the bushing (6) and the pipe ends bearing a recess (13, 14) define an annular space (15) in which a sealing sleeve (16) is located, the external diameter of which is somewhat smaller than the internal diameter of the thread-free section (9) of the bushing (6) and which is fixed axially in the recess (14) of the pipe end which points upwards in the drill column and the thread-free section (9) of the sleeve (6) has on the end which points downwards in the drill column a shoulder (24) which projects radially inwards and in the screw-connected state the end faces (17, 18) of the bearing sleeve (16) lie in sealing manner on the annular surface of the respective recess (13, 14) of the pipe ends, while the positive connection (21, 22) of the pipe ends has an axial play (23, 23′) and the pipe (2) of the connection (1) which is suspended underneath in the drill column has a thread-free section (12) adjoining the recess (14) in the direction of the boring head, the axial extent of which section projects beyond the end of the thread-free section (9) of the bushing (6) in the screw-connected state as well and the external diameter of which is somewhat smaller than the radial extent of the shoulder (24) of the bushing (6).

2. A threaded pipe connection according to Claim 1,
**characterised in that**

the threaded section (7, 10) of the bushing (6) and of the pipe (2) which is underneath in a drill column has a left-hand thread and a flatter cone, whereas the one (8, 11) at the top has a right-hand thread and has a steeper cone and also a larger spiral.

3. A threaded pipe connection according to Claims 1 and 2,
**characterised in that**
the cone angle and direction of spiral of the two threaded sections (7, 10; 8, 11) are matched to one another in such a manner that in the unscrewed state the pipe (3) which is uppermost in the threaded connection (1) is free and the pipe (2) suspended beneath it remains positively connected to the bushing (6).

4. A threaded pipe connection according to Claim 3,
**characterised in that**
the degree of the remaining positive overlap in the unscrewed state is suitable for bearing a triple rod.

5. A pipe thread [sic] according to Claim 1,
**characterised in that**
the sealing sleeve (16) has an internal threaded section (19) which extends over a certain length and which can be screw-connected to an external threaded section (20) which is made complementary thereto and is located in the recess (14) of the pipe end which points upwards in the drill column.

6. A threaded pipe connection according to Claim 1,
**characterised in that**
the radial extent of the two recesses (13, 14) is such that the remaining wall thickness in the region of the pipe ends is sufficient for transmitting the operating torque.

7. A threaded pipe connection according to Claim 1,
**characterised in that**
one pipe end has a splined shaft profile in cross-section and that the opposing pipe end has internal splines.

8. A threaded pipe connection according to Claim 7,
**characterised in that**
the profile has at least two or a multiple thereof of splines symmetrically distributed across the circumference, of which one spline and the associated hub differ in circumferential extent.

9. A threaded pipe connection according to Claim 1,
**characterised in that**
the positive connection of the pipe ends is designed as a serration, of which one tooth and the associated tooth gap differ in profile.

10. A threaded pipe connection according to Claim 1,
**characterised in that**
the pipe ends are designed as claws (21, 22), of which one claw and the associated claw gap differ in circumferential extent.

11. A threaded pipe connection according to Claim 1,
**characterised in that**
the sealing sleeve (16) has a recess (27) suitable for receiving a positioning means on the end opposite the threaded section (19).

**Revendications**

1. Raccord fileté de tubes comportant un manchon dont les tronçons filetés intérieurs, différents quant à leur sens de pas ou à leur valeur de pas, s'étendent chacun de l'extrémité respective du manchon jusqu'à un tronçon non fileté situé au centre, le raccord comprenant également deux tubes qui présentent chacun au niveau de la zone d'extrémité de tube ayant subi un refoulement, un tronçon fileté de configuration complémentaire à celui du manchon, et dont les extrémités de tube peuvent s'emmancher l'une dans l'autre par complémentarité de forme, l'ensemble comprenant finalement dans cette zone, un élément d'étanchéité de forme annulaire disposé de manière fixe en rotation,
**caractérisé en ce que**
pour son utilisation en tant que raccord de tubes de forage (1), les tronçons filetés (7, 8; 10, 11) du manchon (6) et des tubes (2, 3), différents quant à leur sens de pas et à leur valeur de pas, sont coniques avec des angles de cône différents, en ce que le tronçon non fileté (9) du manchon (6) et les extrémités de tube comportant un évidement (13, 14) délimitent une chambre annulaire (15) dans laquelle est disposée une douille d'étanchéité (16) dont le diamètre extérieur est légèrement inférieur au diamètre intérieur du tronçon non fileté (9) du manchon (6), et qui est fixée axialement dans l'évidement (14) de l'extrémité de tube dirigée vers le haut dans le train de tiges, en ce que le tronçon non fileté (9) du manchon (6) présente à son extrémité dirigée vers le bas dans le train de tiges, un épaulement (24) en saillie radiale vers l'intérieur, en ce que dans l'état visse, les surfaces frontales (17, 18) de la douille d'étanchéité (16) s'appliquent de manière étanche contre la surface annulaire de l'évidement respectif (13, 14) des extrémités de tube, tandis que la liaison par complémentarité de forme (21, 22) des extrémités de tube présente un jeu axial (23, 23′), et en ce que le tube (2) du raccord (1), suspendu en bas dans le train de tiges, comporte à la suite de l'évidement (14), en direction de la couronne de forage, un tronçon non fileté (12) dont la longueur axiale s'étend, même à l'état vissé, au-delà de l'extrémité du tronçon non fileté (9) du manchon (6), et dont le diamètre extérieur est légèrement inférieur à l'étendue radiale de l'épaulement (24) du manchon (6).

2. Raccord fileté de tubes selon la revendication 1,

**caractérisé en ce que**

le tronçon fileté (7, 10) du manchon (6) et du tube (2), situé dans le bas dans un train de tiges, présente un pas à gauche et un cône plus plat, tandis que le tronçon fileté (8, 11) situé dans le haut du train de tiges présente un pas à droite, un cône plus rapide, ainsi qu'une valeur de pas plus grande.

3. Raccord fileté de tubes selon les revendications 1 et 2,

**caractérisé en ce que**

l'angle de cône et la valeur du pas des deux tronçons filetés (7, 10; 8, 11) sont sélectionnés l'un par rapport à l'autre de manière à ce que dans l'état dévissé, le tube (3) situé dans le haut du raccord fileté (1) est libre et le tube (2) situé au-dessous reste lié au manchon (6), par complémentarité de forme.

4. Raccord fileté de tubes selon la revendication 3,

**caractérisé en ce que**

le degré restant de chevauchement par complémentarité de forme, à l'état dévissé, permet de supporter un train de trois.

5. Raccord fileté de tubes selon la revendication 1,

**caractérisé en ce que**

la douille d'étanchéité (16) présente un tronçon fileté intérieur (19) s'étendant sur une longueur déterminée et susceptible d'être vissé sur un tronçon fileté extérieur (20) de configuration complémentaire, réalisé dans l'évidement (14) de l'extrémité de tube dirigée vers le haut dans le train de tiges.

6. Raccord fileté de tubes selon la revendication 1,

**caractérisé en ce que**

l'étendue radiale des deux évidements (13, 14) est dimensionnée de façon à ce que l'épaisseur de paroi restante dans la zone d'extrémité de tube, est suffisante pour assurer la transmission du couple de travail.

7. Raccord fileté de tubes selon la revendication 1,

**caractérisé en ce qu'**

une extrémité de tube présente en section droite, un profil d'arbre cannelé, et en ce que l'extrémité de tube opposée présente un profil de moyeu cannelé.

8. Raccord fileté de tubes selon la revendication 7,

**caractérisé en ce que**

le profil présente, de manière répartie sur la périphérie, au moins deux ou un multiple de deux cannelures, dont une cannelure de l'arbre et celle correspondante du moyeu sont différentes quant à leur étendue périphérique.

9. Raccord fileté de tubes selon la revendication 1,

**caractérisé en ce que**

la liaison des extrémités de tube par complémentarité de forme se présente sous la forme d'une dentelure, dont une dent et le creux de dent correspondant sont différents quant à leur profil.

10. Raccord fileté de tubes selon la revendication 1,

**caractérisé en ce que**

les extrémités de tubes se présentent sous la forme de crabots (21, 22), dont un crabot et le logement de crabot correspondant sont différents quant à leur étendue périphérique.

11. Raccord fileté de tubes selon la revendication 1,

**caractérisé en ce que**

la douille d'étanchéité (16) comporte à son extrémité opposée à celle pourvue du tronçon fileté (19), un évidement (27) adapté à recevoir un moyen d'actionnement.

Fig.1

EP 0 353 182 B1